Europäisches Patentamt

European Patent Office

Office européen des brevets

(19)

(11) Numéro de publication: **0 204 642**
**A1**

## (12) DEMANDE DE BREVET EUROPEEN

(21) Numéro de dépôt: 86420124.9

(22) Date de dépôt: 15.05.86

(51) Int. Cl.⁴: **B03B 1/04** , B03B 9/02 , B01D 21/01 , C10G 1/04

(30) Priorité: 17.05.85 FR 8507816

(43) Date de publication de la demande:
10.12.86 Bulletin 86/50

(84) Etats contractants désignés:
**DE IT SE**

(71) Demandeur: **URANIUM PECHINEY**
**Tour Manhattan, La Défense 2, 6, place de l'Iris,**
**F-92400 Courbevoie(FR)**

(72) Inventeur: **Lamerant, Jean-Michel**
**Rue de Versailles**
**F-13320 Bouc Bel Air(FR)**
Inventeur: **Pallez, François**
**Le Musset - Bât. 1 Route de Vauvenargues**
**F-13100 Aix-en-Provence(FR)**
Inventeur: **Personnet, Pierre-Bernard**
**L'Oustau dou Souleu Avenue Albertine Maurin**
**F-07700 Bourg-Saint-Andeol(FR)**

(74) Mandataire: **Vanlaer, Marcel et al**
**PECHINEY 28, rue de Bonnel**
**F-69433 Lyon Cédex 3(FR)**

(54) **Procédé de traitement à haute température d'une suspension aqueuse contenant des argiles sous forme dispersée stable.**

(57) L'invention concern un procédé de traitement à haute température d'une suspension aqueuse contenant des argiles sous forme dispersée stable résultant d'un délitage total, cette suspension contenant en outre éventuellement une phase organique dispersée, de façon à obtenir un produit filtrable.

Dans ce procédé, on porte la suspension à traiter à une température comprise entre 150 et 260°C dans un réacteur pressurisé, et on injecte dans le réacteur du lait de chaux à raison de 60 à 400 g de CaO par kg d'argile contenue dans la suspension à traiter, à une température au moins égale à 150°C.

Le procédé s'applique typiquement à des suspensions aqueuses argileuses de teneurs en argiles comprises entre 15 et 35% en poids.

## PROCEDE DE TRAITEMENT A HAUTE TEMPERATURE D'UNE SUSPENSION AQUEUSE CONTENANT DES ARGILES SOUS FORME DISPERSEE STABLE

L'invention concerne un procédé de traitement à haute température d'une suspension aqueuse contenant des argiles sous forme dispersée stable résultant d'un délitage total, cette suspension aqueuse contenant en outre éventuellement une phase organique dispersée, de façon à obtenir un produit filtrable.

EXPOSE DU PROBLEME:

Il existe dans le monde d'importantes réserves d'éléments valorisables sous forme de minerais dont la gangue contient des composés argileux susceptibles de former une suspension plastique stable en présence d'eau. Dans une telle suspension, l'argile est totalement délitée.

Plus particulièrement, dans le case des réserves de pétrole lourd à forte viscosité se trouvant dans des sables ou grès argileux appelés "sables bitumineux", le traitement d'extraction du pétrole lourd ou bitume est effectué à grande échelle, par exemple par le procédé à l'eau chaude ("Hot water extraction process") décrit par le brevet CA 1.131.574, et il conduit à de grandes quantités de liqueurs résiduelles déversées et stockées dans d'immenses champs d'épandage. Par effet de décantation, il surnage une phase aqueuse qui peut être recyclée dans le procédé d'extraction, tandis que de façon typique, il se sépare vers le fond du champ d'épandage une suspension aqueuse ayant la consistance d'une pulpe fluide laiteuse.

Cette suspension contient une proportion importante de solides, essentiellement constitués d'argiles, des résidus de bitume, et typiquement 60 à 85% d'eau.

A cause de la présence d'argiles sous forme dispersée stable et aussi, dans le cas évoqué, à cause des souillures de bitume, cette phase dont l'essentiel résulte du processus de séparation par décantation pendant de longues durées, typiquement plusieurs mois ou même plusieurs années, n'est ni recyclable, ni filtrable, ni évacuable sous une forme acceptable pour l'environnement.

On a cherché à mettre au point un procédé qui permette de transformer cette suspension, et de façon plus générale toute suspension aqueuse contenant des argiles sous forme dispersée stable et éventuellement une phase organique dispersée, en un produit filtrable ou décantable.

On a également comme but de faire disparaître éventuellement les traces de bitume visqueux dommageables pour l'environnement. Et aussi d'aboutir à un procédé économique à exploiter, cela d'autant plus que l'importance des quantités de suspensions aqueuses à traiter peut être considérable.

ETAT DE LA TECHNIQUE CONNU:

Le procédé à mettre au point aboutir à une filtration aisée de la suspension aqueuse après traitement. Il pourrait utiliser une consolidation des argiles contenues, mais la forme dispersée stable résultant d'un délitage total de ces argiles au sein de ladite suspension rend ce type de solution problématique.

La demande de brevet EP 0040707, correspondant au brevet US 4.312.761, décrit un procédé de traitement d'une telle suspension aqueuse à température comprise entre 150 et 320°C sous 33 à 220 bars avec comme oxydant de l'oxygène, traitement suivi d'une séparation des phases liquide et solide.

Un traitement à 300°C conduit à un débit spécifique de filtration de la suspension traitée de 15 kg $h^{-1}$ $m^{-2}$ pour 29,6% de solides dans le produit initial, ce qui correspond à un débit spécifique de filtration de la phase liquide de 0,036 $m^3 h^{-1} m^{-2}$.

La mise en oeuvre de ce procédé à haute température et à haute pression nécessite un réacteur à parois très épaisses, et la demanderesse a cherché à mettre au point un procédé modifié conduisant à une réduction des températures et pressions de traitement et à une amélioration de la filtratablité des suspensions traitées.

EXPOSE DE L'INVENTION

Le procédé de traitement selon l'invention s'applique aux suspensions aqueuses contenant des argiles sous forme dispersée stable, quelle que soit la nature de ces argiles ou composés argileux. Ces composés argileux peuvent appartenir aux groupes constitués par des kaolinites, telles que, par exemple, la kaolinite, la dickite, l'halloysite, les kaolinites désordonnées, les serpentines; le groupe des micas, tels que, par exemple, muscovite, biotite, et paragonite, la pyrophyllite et le talc, les illites et la glauconite; le groupe des montmorillonites, telles que, par exemple, la beidéllite, la stévensite, la saponite et l'hectorite; le groupe des chlorites; le groupe des vermiculites; le groupe des argiles in- terstratifées dont le structure unitaire est une combinaison des groupes précédents; le groupe des argiles fibreuses, telles que, par exemple, l'attapulgite (palygorskite), la sépiolite.

Selon le procédé de l'invention, on porte une telle suspension aqueuse à une température comprise entre 150 et 260°C dans un réacteur pressurisé, et de façon particulière, on injecte dans le réacteur du lait de chaux à raison de 60 à 400 g de CaO par kg d'argile contenue dans la suspension traitée, cette injection étant faite à une température au moins égale à 150°C.

Si on introduit CaO à froid dans la suspension à traiter, on observé une prise en masse de cette suspension au cours du chauffage. L'introduction de CaO au-dessus de 150°C permet d'éviter cette prise en masse et d'obtenir une modification de la suspension produisant une amélioration surprenante de sa filtrabilité.

Lorsque la suspension aqueuse argileuse à traiter contient une phase organique dispersée, par exemple du bitume, on peut aussi selon le procédé de l'invention associer au traitement par la chaux une oxydation à chaud avec un double intérêt:

-d'abord, fournir des calories et les utiliser pour l'entretien de la température de traitement selon l'invention, par exemple à l'aide d'un échangeur thermique à contre-courant;

-ensuite oxyder une partie notable des matières organiques, de façon que le produit obtenu soit plus propre.

Pour réaliser une telle oxydation, on injecte dans le réacteur au cours du traitement de l'oxygène ou un mélange gazeux contenant de l'oxygène. De façon à obtenir une bonne filtrabilité, on ajoute alors de préférence un agent antimousse à la suspension à traiter.

La pression partielle en oxygène dans le réacteur conditionne la cinétique d'oxydation: en-dessous de 2 bars, cette cinétique devient en pratique trop lente, et au-dessus de 10 bars, l'amélioration observée n'est plus intéressante visà-vis des surcoûts liés à l'acroissement de la quantité d'oxygène et à l'accroissement de pression. Les conditions d'injection gazeuse sont donc de préférence réglées de sorte que la pression partielle en oxygène dans le réacteur soit comprise entre 2 et 10 bars. Le mélange gazeux contenant de l'oxygène peut être par exemple de l'air enrichi en oxygène. L'oxydation a essentiellement lieu, comme il est connu, à partir de 200°C, et il est préférable de commencer l'injection d'oxygène un peu en-dessous de cette température, à partir d'une température au moins égale à 120°C.

L'action d'oxydation de la phase organique est, d'après les essais effectués, distincte de la modification de la suspension aqueuse opérée sous le double effet de la température et de l'injection de lait de chaux, modification rendant cette suspension filtrable.

Qu'on insuffle ou non de l'oxygène ou un mélange gazeux contenant de l'oxygène au cours du traitement, la quantité de CaO injecté sous forme de lait de chaux est de préférence de 100 g à 280 g de CaO par kg d'argile contenue dans la suspension à traiter, et de préférence encore pour l'économie du procédé de 100g à 220g de CaO par kg d'argile contenue.

De préférence, on porte la suspension aqueuse argileuse traitée à une température comprise entre 180 et 240°C, et on la maintient typiquement 5 minutes à 2 heures dans cet intervalle de températures. L'injection de lait de chaux est de préférence faite à une température au moins égale à la température maximale atteinte moins 20°C.

ESSAIS:

Les essais ont porté sur deux suspensions aqueuses A et B d'origines différentes:

-la suspension argileuse stable A provenant des rejets d'une insallation de traitement de phosphates; elle contenait 28,8% en poids de matières argileuses;

-la suspension B provenant d'un champ d'épandage de liqueurs résiduelles du procédé d'extraction du bitume dit "procédé à l'eau chaude" et ayant la composition suivante (% en poids):

24 % d'argiles (essentiellement 19% kaolinite et 5% illite)

0,8% autres solides

73,3% eau

1,9% phase organique (bitume)

----

100%

Dans chaque essai, on a traité un prélèvement de un litre de l'une ou l'autre suspension, dans un réacteur en acier inoxydable de capacité 2 litres, muni d'une turbine ou agitateur à axe vertical, comportant 3 pales verticales et tournant à 400 tours par minute. Le réacteur était chauffé par une enceinte électrique chauffante, il était muni de moyens d'injection de lait de chaux, de moyens d'injection gazeuse et de moyens de fuite.

A la fin de chaque essai, au bout du temps choisi pour le traitement à température, le réacteur était immergé dans de l'eau froide afin de provoquer un refroidissement rapide de la suspension. Après refroidissement à 1 temperature de 60°C, la suspension traitée était soumise à un test de séparation qui consistait à faire passer la suspension sur un filtre Büchner en pratiquant un vide de 500 millimètres de mercure, et à mesurer ainsi la vitesse de séparation de la phase liquide en mètre$^3$ × heure$^{-1}$ × mètre$^{-2}$. On a également mesuré le taux d'imprégnation en eau "I" (% en poids) de la phase solide ou "gâteau" obtenu dans cette filtration, un gâteau trop humide conduisant à une fin de filtration par essorage longue.

La filtration est globalement "bonne" si la vitesse de filtration dépasse 1m$^3$.h$^{-1}$.m$^{-2}$ et si en outre le taux d'imprégnation en eau I est inférieur à environ 63%. Pour tous les essais de filtration, on a utilisé comme floculant du "Magnafloc 455" de ALLIED CHEMICALS ajouté à la suspension traitée et refroidie à 60°C.

Les résultats des divers essais sont regroupés dans un tableau qui demande les commentaires suivants:

-le N° essai comporte d'abord la lettre "A" ou "B" identifiant la suspension argileuse traitée;

-la colonne "divers" regroupe: les anomalies éventuelles de traitement à la chaux, la dilution préalable éventuelle "1/1" c'est-à-dire avec un égal volume d'eau, et l'ajout d'antimousse, en pratique nécessaire dans le cas où la suspension traitée contient une phase organique dispersée et où on injecte pendant le traitement de l'oxygène ou un mélange gazeux contenant de l'oxygène;

-les indications de dosage du lait de chaux sont en g de CaO contenu par litre de suspension initiale à traiter, et en g de CaO par kg d'argiles contenues dans cette suspension; il s'agit dans tous les cas d'un lait de chaux à 23,1% de CaO;

-la température est la température maximale atteinte, ici 220°C en palier, et la durée de ce palier, inférieure de 5 à 10 mn à la durée totale du traitement au-dessus de 180°C;

-la colonne "oxydation O$_2$" indique le stade d'introduction de l'oxygène, ici au début du palier à 220°C, c'est-àdire dès cette température atteinte - ("à partir de 220°C").

L'essai "A040" est un essai de filtration de la suspension A non traitée, l'essai "A041" avec traitement à 220°C en injectant 167 g de CaO par kg d'argile contenue montre une amélioration surprenante de la filtrabilité: vitesse de filtration 1,63 au lieu de 0,22 m$^3$.h$^{-1}$.m$^{-2}$ et taux d'imprégnation I = 20,4% au lieu de 61,1%.

Les autres essais présentés portent sur la suspension argileuse B' contenant 1,9% de bitume dispersé. L'essai "B219" correspond à un traitement à 220°C sans chaux, la pulpe liquide obtenue est infiltrable. L'essai "B254" correspond à un traitement à un traitement à 220°C avec introduction de CaO au départ: le résultat est une prise en masse pâteuse bloquant l'agitateur. L'ajout de CaO à température trop faible, en-dessous de 150°C, est donc néfaste.

L'essai "B242" traité avec CaO et insufflation d'oxygène, mais sans anti-mousse, donne une mauvaise filtration, par suite de la mousse formée. Il est donc indispensable d'ajouter de façon connue un anti-mousse, et cela est fait pour les essais "B245" à "B250".

Les essais "B242" -"B245" -"B246" et "B248" correspondent au cas où la suspension délitée à traiter a été additionnée d'eau peu avant le traitement: malgré cette anomalie, on voit l'effet de l'injection de chaux et on obtient avec l'anti-mousse des vitesses de filtration supérieures à 1 m$^3$.h$^{-1}$.m$^{-2}$.

En comparant les résultats de ces essais, et spécialement celui de l'essai "B246" avec les résultats des essais "B249" et "B250" sans dilution préalable, on conclut cependant que la dilution initiale a un effet néfaste sur la vitesse de filtration et sur l'impregnation d'eau du gâteau.

Les deux derniers essais "B249" et "B250" sans dilution préalable, donnent de trés bonnes vitesses de filtration: respectivement 3,22 et 3,77 m$^3$.h$^{-1}$.m$^{-2}$ et des imprégnations d'eau acceptables. Dans l'essai "B250", on a mis la suspension à la pression atmosphérique brutalement à la fin du traitement, pour en tester l'effet sur la filtrabilité: les résultats sont de façon surprenante bons et même en amélioration par rapport à ceux de l'essai précédent "B249".

Reprenant les résultats des essais précédents, on comprend dans l'expression "suspension aqueuse contenant des argiles sous forme dispersée stable": soit la suspension initiale, soit cette suspension additionnée au plus d'un égal volume d'eau et de préférence au plus de 50% de son volume d'eau.

Le procédé de l'invention s'applique typiquement à de telles suspensions argileuses de teneurs en argiles comprises entre 15 et 35% en poids, et contenant éventuellement une phase organique dispersée de teneur comprise entre 1 et 3%.

0 204 642

| N°essai | divers | dosage lait de chaux | | température, durée | température introduction de CaO | oxydation $O_2$ | pression totale (bars) | essais de filtration | | Observations |
|---|---|---|---|---|---|---|---|---|---|---|
| | | CaO(g/l) | CaO(g/kg) | | | | | vitesse de filtration $(m^3 h^{-1} m^{-2})$ | imprégnation d'eau I(%) | |
| A040 | non traité | | | | | | | 0,22 | 61,1 | |
| A041 | | 40 | 167 | 220°C 1h | au début de220°C | néant | 23 | 1,63 | 20,4 | |
| B219 | traité sans chaux | | | " | | à partir de220°C | 30 | | | pulpe liquide infiltrable |
| B254 | chaux introduite à froid + antimousse | 47 | 196 | " | (20°C) | " | 30 | | | prise en masse pâteuse,agitateur bloqué |
| B242 | dilué 1/1 pas d'anti-mousse | 63 | 262 | " | au début de220°C | " | 30 | 0,2 | 53 | mauvaise filtration(mousse) |
| B245 | dilué 1/1 + anti-mousse | 91 | 379 | " | " | " | 30 | 1,4 | 66 | |
| B246 | " " | 25 | 104 | " | " | " | 30 | 1,4 | 73 | gâteau mou,essorage long |
| B248 | " " | 56 | 234 | " | " | " | 30 | 1,03 | 63 | |
| B249 | non dilué + anti-mousse | 53 | 221 | " | " | " | 30 | 3,22 | 62 | |
| B250 | non dilué + anti-mousse +détente brutale à la fin | 50 | 208 | " | " | " | 30→0 à la fin | 3,77 | 60 | |

## Revendications

1. Procédé de traitement d'une suspension aqueuse contenant des argiles sous forme dispersée stable et éventuellement une phase organique dispersée, dans lequel on porte ladite suspension à une température comprise entre 150 et 260°C dans un réacteur pressurisé, caractérisé en ce que l'on injecte dans le réacteur du lait de chaux à raison de 60 à 400g de CaO par kg d'argile contenue dans la suspension traitée, à une température au moins égale à 150°C.

2. Procédé selon la revendication 1, dans le cas où la suspension aqueuse à traiter contient une phase organique dispersée, caractérisé en ce qu'au cours du traitement on injecte dans le réacteur de l'oxygène ou un mélange gazeux contenant de l'oxygène.

3. Procédé selon la revendication 2, caractérisé en ce qu'on ajoute un agent anti-mousse à la suspension à traiter.

4. Procédé selon la revendication 2, caractérisé en ce que l'injection gazeuse est réglée de sorte que la pression partielle en oxygène dans le réacteur soit comprise entre 2 et 10 bars.

5. Procédé selon l'une quelconque des revendications 2 ou 4, caractérisé en ce qu'on injecte l'oxygène ou le mélange gazeux contenant de l'oxygène à partir d'une température au moins égale à 120°C.

6. Procédé selon l'une quelconque des revendications 1 à 3, caractérisé en ce que l'on injecte dans le réacteur du lait de chaux à raison de 100 à 280 g de CaO par kg d'argile contenue dans la suspension à traiter.

7. Procédé selon l'une quelconque des revendications 1 á à 3, caractérisé en ce que l'on injecte dans le réacteur du lait de chaux à raison de 100 à 220 g de CaO par kg d'argile contenue dans la suspension traitée.

8. Procédé selon l'une quelconque des revendications 1 à 3, caractérisé en ce que l'on porte la suspension à une température comprise entre 180 et 240°C, et en ce que l'on injecte dans le réacteur du lait de chaux à une température au moins égale à la température maximale du traitement moins 20°C.

9. Procédé selon la revendication 8, caractérisé en ce que l'on injecte dans le réacteur du lait de chaux à raison de 100 à 280g de CaO par kg d'argile contenue dans la suspension à traiter.

10. Procédé selon la revendication 8, caractérisé en ce que l'on injecte dans le réacteur du lait de chaux à raison de 100 à 220g de CaO par kg d'argile contenue dans la suspension à traiter.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CA-A-1 088 883 (TREVOY et al.) * Page 4, ligne 15 - page 5, ligne 10 * | 1,2 | B 03 B 1/04 B 03 B 9/02 B 01 D 21/01 C 10 G 1/04 |
| | --- | | |
| A | US-A-4 282 103 (FUHR et al.) * Colonne 5, lignes 45-48 * | 1 | |
| | --- | | |
| A | US-A-3 075 913 (SCHEFFEL et al.) * Colonne 2, lignes 23-29 * | 1 | |
| | --- | | |
| A | US-A-3 951 800 (ASHTON et al.) * Colonne 4, lignes 48-50; colonne 5, lignes 43-46 * | 1 | |
| | --- | | |
| A | CA-A-1 110 950 (YONG et al.) * Page 10,lignes 1-4; page 13, lignes 21-29 * | 1 | DOMAINES TECHNIQUES RECHERCHES (Int. Cl.4) |
| | --- | | |
| A,D | EP-A-0 040 707 (ZIMPRO-AEC) | 1,2 | B 03 B B 01 D C 10 G C 02 F |
| | ----- | | |

Le présent rapport de recherche a été établi pour toutes les revendications

| Lieu de la recherche | Date d'achèvement de la recherche | Examinateur |
|---|---|---|
| LA HAYE | 12-08-1986 | ASHLEY G.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82